# EUROPEAN PATENT APPLICATION

(11) **EP 1 372 086 A1**
(43) Date of publication of application: **17.12.2003**
(21) Application number: 02405485.0
(22) Date of filing: 12.06.2002
(51) Int. Cl.: G06F 17/30

(54) **Iterative data-driven searching**

(71) Applicant: Commerce One Operations, Inc., Pleasanton, CA 94563 (US)
(72) Inventor: Lundblad, Eric J., Oakland, CA 94602 (US)
(74) Representative: Falk, Urs, Dr.

(57) **Abstract**

An iterative, data driven search strategy that permits a user to locate data without having specific knowledge about content. A data grid is a data structure formed following data analysis. It comprises one or more axes of values, represent dimensions, and a plurality of cells representing aggregate values. In the present invention, it permits the storage of a summary of result data. The user begins with a traditional search method (100), but rather than providing the user with search results, a data grid is formed using the results (102). The user then selects one or more dimension values and/or aggregate values and the search is re-executed using the selection(s) (104). Since the data grid contains information derived from the content of the search results, the user has the ability to make the selection based on dimension values or aggregate values derived from the results themselves. This on-the-fly dynamic iterative search may then be repeated until the required information is found, allowing a user to narrow a search based on the content of search results without having previous knowledge about the content (106).

## Description

### FIELD OF THE INVENTION

The present invention relates to data searching. More specifically, the present invention relates to a technique for an improved search through large amounts of data using an interative data-driven search approach.

### BACKGROUND OF THE INVENTION

Searching though large amounts of data in a computer system to find desired information can be a daunting task. Numerous approaches have been attempted to aid the searcher in finding the appropriate data. These include FreeText searches, structured searches, parametric searches, and category hierarchy searches.

In a FreeText search, the system looks through entire documents looking for words given in the search specification. If any of the words appear in a given document (or perhaps a portion of the document), the document is returned. In a FreeText search, the content may be unstructured.

In a structured search, the content is highly structured, typically in a relational database system. The user search interface typically gives a form with many fields, each field having a specific meaning. For example, a field for supplier name, a field for part number, etc. If the supplier name field is used, then a valid supplier name must be given (giving a valid part number in the supplier name field will yield no results). Structured searches require the user to adhere to the strict structure of the interface. This on the one hand often increases the relevancy of the returned results as users can never stray too much from an optimal search term. For example, a user might type in the wrong supplier name in a supplier name field, but any search done on a term entered in the supplier name field would still be focused on results from a specific supplier name. On the other hand, however, structured searches are limited in nature to searching strictly controlled records in a strictly defined way, eliminating some of the freedom of a FreeText search that might have aided in returning more relevant results.

For a category hierarchy search, information is categorized into a subject matter hierarchy which can be used for searching. For example, the Universal Standard Products and Services Codes (UNSPSC) has defined a hierarchy of subject matters that covers a broad array of topics. Categories like "apparel" maybe at the top of the hierarchy, and "shirts", "pants", and "socks", could be underneath "apparel". Other category hierarchies are of course possible as well. The user may then traverse down the hierarchy tree until finding the specific category of interest and the view the records or web pages listed under that category.

A parametric search is a subtype of a structured search, where the content is categorized in some way. The structure of the data is different for each category. Due to the fact that the structure is category dependent, the user search interface will provide different search fields depending on what category the user has expressed an interest.

Hybrids of these search approaches are common as well. Collectively, these search approaches will be referred to as the traditional search method.

The major problem with the traditional search method is that it requires the user to have a certain amount of knowledge about the data being searched. If the user doesn't know the right word to use, then none of the traditional search types will find the content they need. This problem often manifests itself as a dilemma for the user, who is forced to choose between (1) making the search less specific to increase the likelihood the content they require will be returned; or (2) making the search more specific to make the result set manageable. The problem with choice (1), is that making the search less specific often results in an excessively long list of results. The problem with choice (2) is that it often misses the content the user needs, because the user lacks knowledge about the data.

Frequently users know what they are looking for in general, but they don't know enough specific information about the topic to obtain relevant results with the traditional search method. What is needed is a solution that allows users to search for required information or data based on actual data rather than depending on the user knowing the appropriate search criteria.

### BRIEF DESCRIPTION OF THE INVENTION

An iterative, data driven search strategy that permits a user to locate data without having specific knowledge about content. A data grid is a data structure formed following data analysis. It comprises one or more axes of values, representing dimensions, and a plurality of cells representing aggregate values. In the present invention, it permits the storage of a summary of result data.

The user begins with a traditional search method, but rather than providing the user with search results, a data grid is formed using the results. The user then selects one or more dimension values and/or aggregate values and the search is re-executed using the selection(s). Since the data grid contains information derived from the content of the search results, the user has the ability to make the selection based on dimension values or aggregate values derived from the results themselves. This on-the-fly dynamic iterative search may then be repeated until the required information is found, allowing a user to narrow a search based on the content of search results without having previous knowledge about the content.

### BRIEF DESCRIPTION OF THE DRAWINGS

The accompanying drawings, which are incorporated into and constitute a part of this specification, illustrate one or more embodiments of the present invention and, together with the detailed description, serve to explain the principles and implementations of the invention.

In the drawings:
FIG. 1 is a flow diagram illustrating a method for creating a reusable and modular HTML fragment in JSP in accordance with a specific embodiment of the present invention.
FIG. 2 is a block diagram illustrating an apparatus for creating a reusable and modular HTML fragment in JSP in accordance with a specific embodiment of the present invention.
FIG. 3 is a screen shot depicting an example of the starting point of a search in accordance with a specific embodiment of the present invention.
FIG. 4 is a screen shot depicting an example of the results of the traditional search of FIG. 3 in accordance with a specific embodiment of the present invention.
FIG. 5 is a screen shot depicting an example of the results of a further refinement of the search in FIG. 4 in accordance with a specific embodiment of the present invention.
FIG. 6 is a screen shot depicting an example of the results of FIG. 4 grouped by manufacturer in accordance with a specific embodiment of the present invention.
FIG. 7 is a screen shot depicting an example of the results of FIG. 4 grouped by price range in accordance with a specific embodiment of the present invention.
FIG. 8 is a screen shot depicting the results of selecting a price range of $17.50 - $55.75 in FIG. 7 in accordance with a specific embodiment of the present invention.

### DETAILED DESCRIPTION

Embodiments of the present invention are described herein in the context of a system of computer, servers, communication mechanism, and tags. Those of ordinary skill in the art will realize that the following detailed description of the present invention is illustrative only and is not intended to be in any way limiting. Other embodiments of the present invention will readily suggest themselves to such skilled persons having the benefit of this disclosure. Reference will now be made in detail to implementations of the present invention as illustrated in the accompanying drawings. The same reference indicators will be used throughout the drawings and the following detailed description to refer to the same or like parts.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

In accordance with the present invention, the components, process steps, and/or data structures may be implemented using various types of operating systems, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope and spirit of the inventive concepts disclosed herein.

The present invention provides an iterative, data driven search strategy that permits a user to locate data without having specific knowledge about content. The user begins with a traditional search method, but rather than providing the user with search results, data analysis takes place and the search is re-executed with the results of the data analysis. This on-the-fly, iterative data analysis may then be repeated until the required information is found.

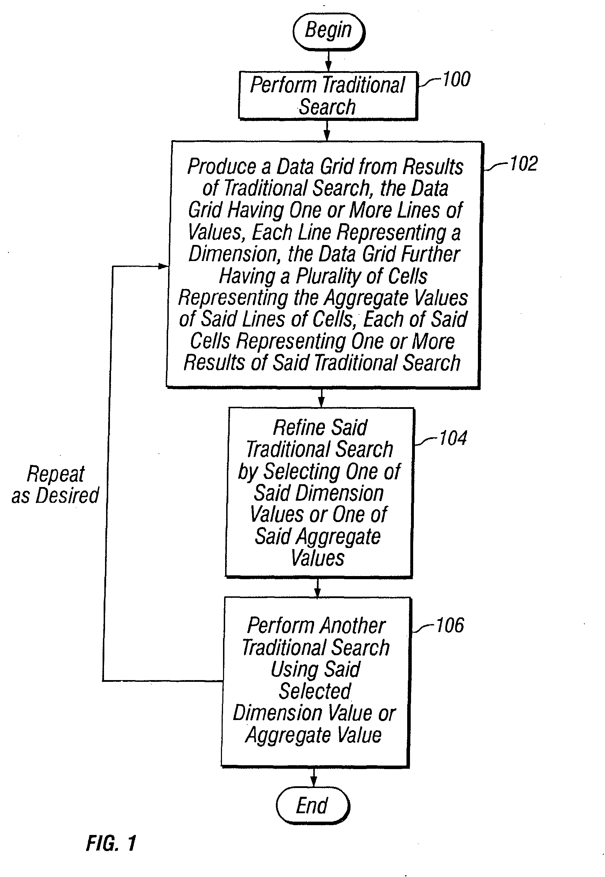

FIG. 1 is a flow diagram illustrating a method for a data-driven search of information in accordance with a specific embodiment of the present invention. At 100, a traditional search is performed. One or more results are generated by this traditional search. The actions taken at reference numerals 102 and 104 may be collectively referred to as data analysis (similar to Online Analytical Processing (OLAP), or data mining). However, as will be seen, these actions differ from traditional data analysis, OLAP, or data mining in that the analysis is performed dynamically and is focused on refining the results in a way that can be iteratively passed to a subsequent search.

At 102, a data grid is produced from the results of the traditional search. A data grid is a data structure that provides a way to summarize the data. A data grid is comprised of one or more axes of values, each axis of values representing a different dimension. These axes may be referred to as "rows" or "columns" depending upon the orientation or number of dimensions. The remainder of the grid may be filled by cells representing aggregate values. An aggregate value is a value that is computed over the results that match the cell's dimension values. An aggregate value can represent various types of information. For example, it may represent a simple count of records. It may also be computed on one of the input records columns (a different column from any of the dimensions). For example, the aggregate value may represent an average of values contained in each of the records matching the dimensions. Other examples include minimum or maximum values.

The following is an example of a two-dimensional data grid:

| | D1a | D1b | D1c | Did |
|---|---|---|---|---|
| D2a | a1 | a7 | a13 | a19 |
| D2b | a2 | a8 | a14 | a20 |
| D2c | a3 | a9 | a15 | a21 |
| D2d | a4 | a10 | a16 | a22 |
| D2e | a5 | a11 | a17 | a23 |
| D2f | a6 | a12 | a18 | a24 |

D1a-D1d represent a first axis of cells and are values from the first dimensions D2a-D2f represent a second axis of cells and are values from a second dimension. a1-a24 are aggregate values. For example, D1 could represent "Supplier Name", with D1a-D1d representing each of four supplier names. D2 could represent "Manufacturer Name", with D2a-D2f representing each of six manufacturer names. The aggregate values could represent the average price for goods in the search results for various manufacturer/supplier combinations.

Each dimension must be defined using a column from the input rowset. Not all columns from the input rowset, however, need to be represented in the data grid. Situations are possible that allow at least one column from the input rowset to be left out of the data grid to allow the aggregate values to be computed on one of the input records columns different than one of the dimensions. The number of possible dimensions is infinite, but at the number of dimensions increase, so does the complexity of the data grid.

Each dimension may be formed using either the distinct values or the value ranges from the column of the input dataset. Using the unique values provides a more detailed summary of the input data, whereas the value ranges gives a higher level summary. Value ranges are often used when there are a large number of unique values in the input column. For example, when using price as a dimension it is often more useful to give prices ranges because there are often many different prices for the returned results.

The aggregate values may be based on any column values in the table. Alternatively, the aggregate values may be based on values not included in any of the column values in the table. For example, the aggregate values could be based on the number of rows in the table that have a given D1 and D2 value. Sums, averages, etc. are also possible operators for the aggregate values. Thus, nothing in this application should be read as limiting the invention to certain types of aggregate values.

At 104, the traditional search is refined by selecting one of the dimension values or aggregate values. It should be noted that refining by using multiple values is possible, but for simplicity refining based on a single value is discussed herein. An example of refining the search based on one of the dimension values would be selecting a particular manufacturer. An example of refining the search based on one of the aggregate values would be selecting the lowest average price.

At 106, the selected value is fed back into the traditional search using iterative techniques. The selected values may be combined with the previous traditional search condition using Boolean logic. The search is then performed again with this refinement, resulting in a new set of results that hopefully more accurately represents results the user intended to find. If the user still has not found appropriate results, another data grid may be formed from the subsequent search's results and refined further. This may be repeated as desired. Additionally, should the user so desire, the search can step back a level and the user can select a different dimension value or aggregate value on which to refine in case there is a feeling that the previous selection was incorrect or misleading.

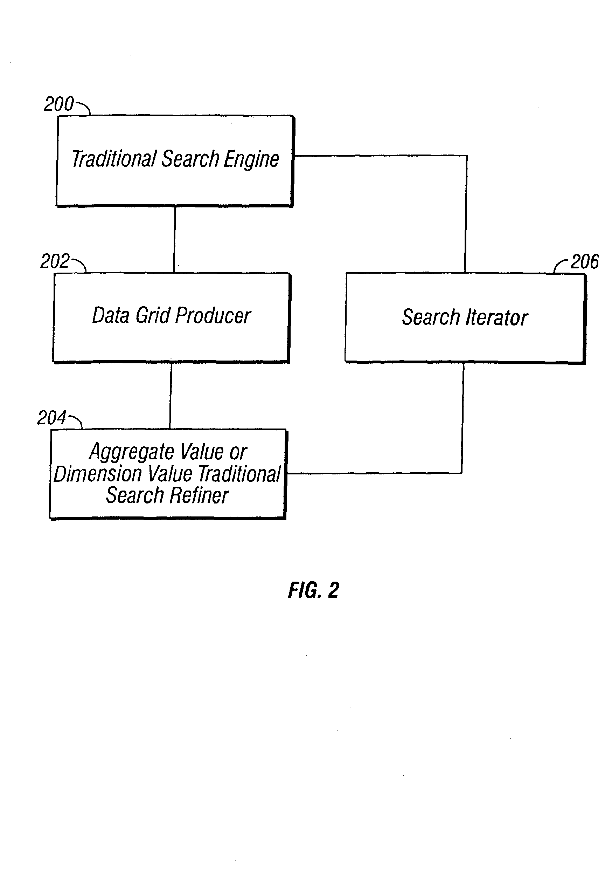

FIG. 2 is a block diagram illustrating an apparatus for a data-driven search of information in accordance with a specific embodiment of the present invention. A traditional search engine 200 performs a traditional search. One or more results are generated by this traditional search.

A data grid producer 202 coupled to the traditional search engine 200 produces a data grid from the results of the traditional search. The data grid is comprised of one or more axes of values, each axis of values representing a different dimension. These axes may be referred to as "rows" or "columns" depending upon the orientation or number of dimensions. The remainder of the grid may be filled by cells representing aggregate values. An aggregate value is a value that is computed over the results that match the cell's dimension values. An aggregate value can represent various types of information. For example, normally it may represent a simple count of records. In the present invention, however, the aggregate value must be computed on one of the input records columns (must be a different column from any of the dimensions). This is due to the iterative nature of the invention.

Each dimension must be defined using a column from the input rowset. Not all columns from the input rowset, however, need to be represented in the data grid. Situations are possible that allow at least one column from the input rowset to be left out of the data grid to allow the aggregate values to be computed on one of the input records columns different than one of the dimensions. The number of possible dimensions is infinite, but at the number of dimensions increase, so does the complexity of the data grid.

Each dimension may be formed using either the distinct values or the value ranges from the column of the input dataset. Using the unique values provides a more detailed summary of the input data, whereas the value ranges gives a higher level summary. Value ranges are often used when there are a large number of unique values in the input column. For example, when using price as a dimension it is often more useful to give prices ranges because there are often many different prices for the returned results.

The aggregate values may be based on any column values in the table. Alternatively, the aggregate values may be based on values not included in any of the column values in the table. For example, the aggregate values could be based on the number of rows in the table that have a given D1 and D2 value. Sums, averages, etc. are also possible operators for the aggregate values. Thus, nothing in this application should be read as limiting the invention to certain types of aggregate values.

An aggregate value or dimension value traditional search refiner 204 coupled to said data grid producer 202 refines the traditional search by selecting one of the dimension values or one of the aggregate values. It should be noted that refining by using multiple is possible, but for simplicity refining based on a single value will be discussed.

A search iterator 206 coupled to the traditional search engine 200 and to said aggregate value or dimension value traditional search refiner 204 feeds the selected dimension value or aggregate value back into the traditional search using iterative techniques. The search is then performed again with this refinement, resulting in a new set of results that hopefully more accurately represents results the user intended to find. If the user still has not found appropriate results, another data grid may be formed from the subsequent search's results and refined further. This may be repeated as desired. Additionally, should the user so desire, the search can step back a level and the user can select a different dimension value or aggregate value on which to refine in case there is a feeling that the previous selection was incorrect or misleading.

This process allows the user to utilize information returned in a search as a basis for refining the search with a subsequent search. This type of iterative-based search provides many benefits over traditional searches. Most importantly, it eliminates necessity of the user refining a search without being familiar with the content, thus providing for much quicker and more accurate searches.

While the term "user" has been used throughout this specification, implementations are possible where some or all of the selecting of aggregate values and/or dimension values is made by others, such as programmers setting up software or supervisors customizing the software. For example, it is possible that one person may narrow the range of potential dimension values and/or aggregate values while allowing the user to then select only from that narrowed range.

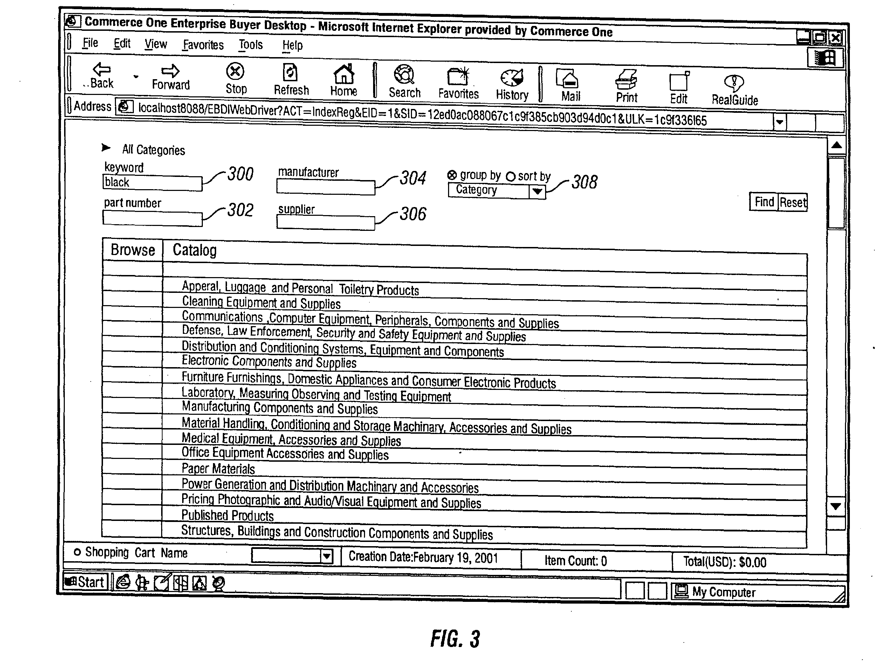

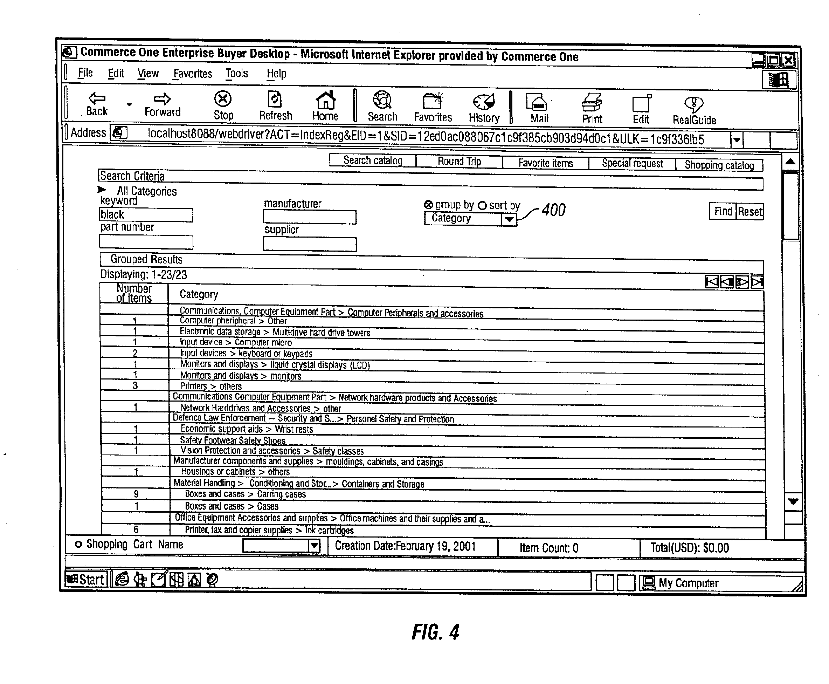

An example of how this process would proceed is now provided. FIG. 3 is a screen shot depicting the starting point of the search, a page offering various types of traditional searches in accordance with a specific embodiment of the present inventions The keyword 300 field may be used for a freetext search, other fields 302, 304, 306 are provided for various structured searches, and a drop-down menu 308 is provided for choosing to refine based on various dimensions. Assuming the user types in the keyword "black", the search returns a number of results. FIG. 4 is a screen shot depicting the results of the traditional search in accordance with a specific embodiment of the present invention. Results may be depicted on the screen in a predefined format, such as by category. As can be seen, the keyword "black" has returned a large number of results. The user may select to group results by various dimensions. The drop down menu 400 provides a selectable list of dimensions for refining the search. The user, for example, may wish to select to view the results based on supplier. This information is fed back into the search, resulting in a new results list grouped by supplier. The user may also further refine the search by selecting one of the dimension values, such as one of the categories, which is fed back into the traditional search.

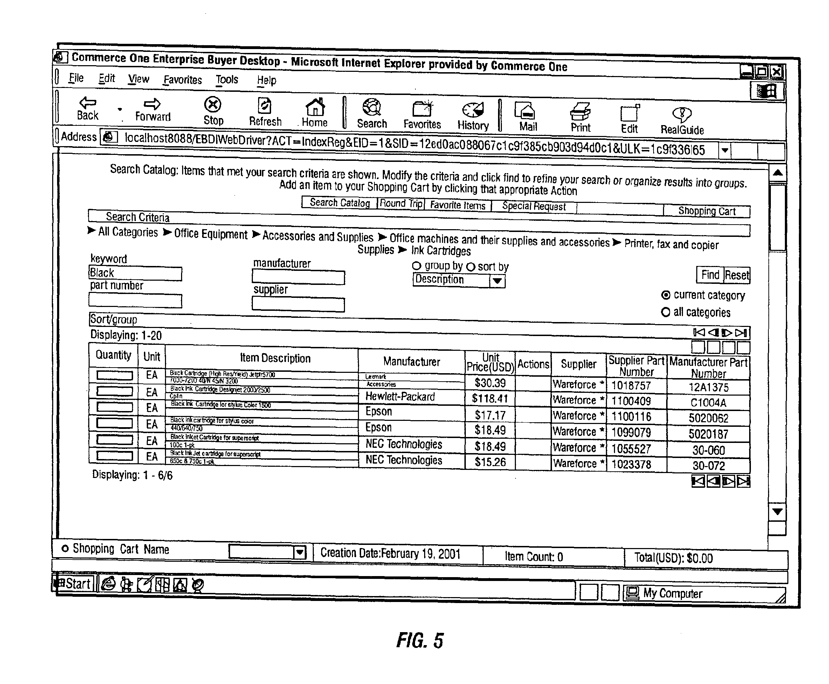

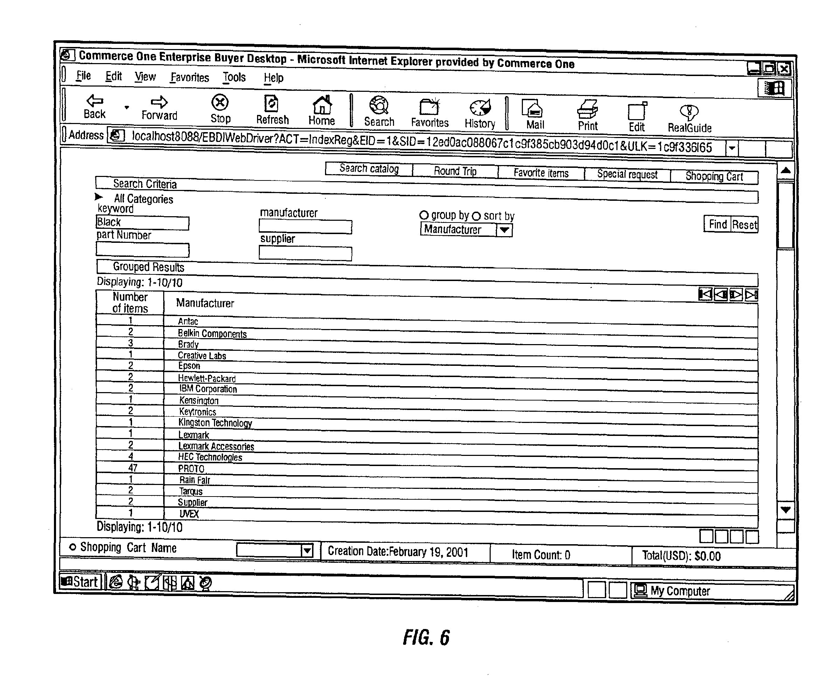

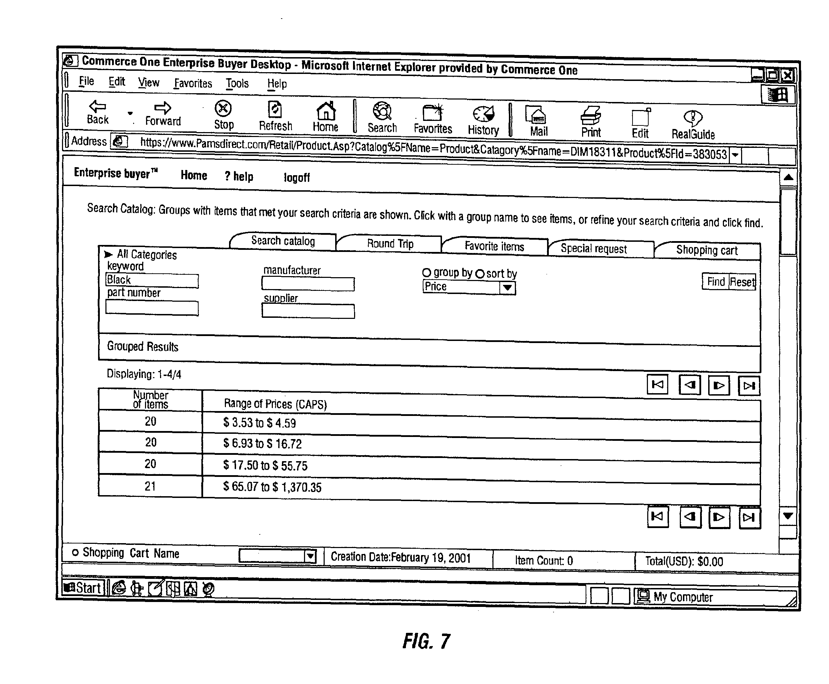

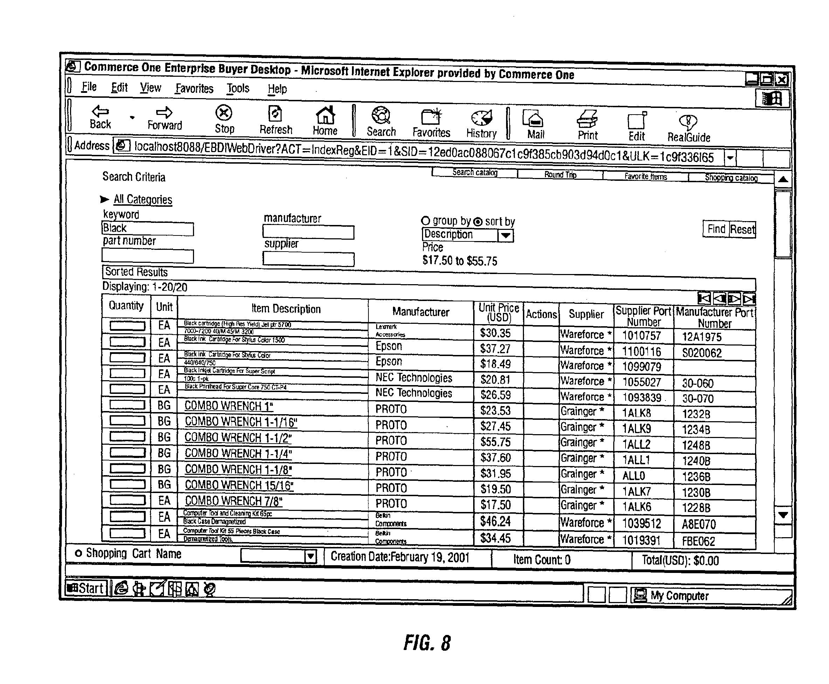

FIG. 5 is a screen shot depicting the results of this further refinement, a list of results with the category "ink cartridges", in accordance with a specific embodiment of the present invention. Alternatively, the user may choose to group by manufacturer. FIG. 6 is a screen shot depicting the results grouped by manufacturer in accordance with a specific embodiment of the present invention. Alternatively, the user may choose to group by price. FIG. 7 is a screen shot depicting the results grouped by price range in accordance with a specific embodiment of the present invention. The user may then select to refine based on one o the price ranges. FIG. 8 is a screen shot depicting the results of selecting a price range of$17.50 - -$55.75 in accordance with a specific embodiment of the present invention.

The user may realize after all of these searches that grouping by manufacturer is the most helpful. Thus, the user can select a particular manufacturer, which refines the search. If the user so desires, the search may then be further grouped by category, supplier, or price to further restrict the search.

While embodiments and applications of this invention have been shown and described, it would be apparent to those skilled in the art having the benefit of this disclosure that many more modifications than mentioned above are possible without departing from the inventive concepts herein. The invention, therefore, is not to be restricted except in the spirit of the appended claims.

## Claims

1. A method for data driven searching of information including:
performing a traditional search, producing results;
producing a data grid from said results, said data grid including one or more axes of dimension values, each axes of dimension values representing a different dimension, and one or more cells containing corresponding aggregate values, each aggregate value being a value computed over results which match the corresponding cell's dimension values;
refining said traditional search by selecting one of said dimension values or aggregate values; and
passing said selected value back into said traditional search using iterative techniques.

2. The method of claim 1, wherein said each of said dimensions is defined using a column from a rowset of said results.

3. The method of claim 2, wherein at least one column from said rowset of said results is not represented by a dimension.

4. The method of claim 2, wherein each dimension is defined using either distinct values or value ranges from said column from said rowset of said results.

5. The method of claim 3, wherein said aggregate value for each of said cells is computed on one of said at least one column not represented by a dimension.

6. The method of claim 1, wherein said passing includes combining said selected value with a previous traditional search condition using boolean logic.

7. The method of claim 1, further including repeating said method if a user still has not found appropriate results.

8. The method of claim 1, further including stepping back one iterative level and repeating said method of a user still has not found appropriate results.

9. A method for data driven searching of information including:
performing a traditional search, producing results;
producing a data grid from said results, said data grid including one or more axes of dimension values, each axes of dimension values representing a different dimension, and one or more cells containing corresponding aggregate values, each aggregate value being a value computed over results which match the corresponding cell's dimension values, wherein each of said dimensions is defined using a column from a rowset of said results;
refining said traditional search by selecting one of said dimension values or aggregate values; and
passing said selected value back into said traditional search using iterative techniques.

10. An apparatus for data driven searching of information, including:
a traditional search engine;
a data grid producer coupled to said traditional search engine;
an aggregate value or dimension value traditional search refiner coupled to said data grid producer; and
a search iterator coupled to said traditional search engine and to said aggregate value or dimension value traditional search refiner.

11. An apparatus for data driven searching of information including:
means for performing a traditional search, producing results;
means for producing a data grid from said results, said data grid including one or more axes of dimension values, each axes of dimension values representing a different dimension, and one or more cells containing corresponding aggregate values, each aggregate value being a value computed over results which match the corresponding cell's dimension values;
means for refining said traditional search by selecting one of said dimension values or aggregate values; and
means for passing said selected value back into said traditional search using iterative techniques.

12. The apparatus of claim 11, wherein said each of said dimensions is defined using a column from a rowset of said results.

13. The apparatus of claim 12, wherein at least one column from said rowset of said results is not represented by a dimension.

14. The apparatus of claim 12, wherein each dimension is defined using either distinct values or value ranges from said column from said rowset of said results.

15. The apparatus of claim 13, wherein said aggregate value for each of said cells is computed on one of said at least one column not represented by a dimension.

16. The apparatus of claim 11, wherein said means for passing includes means for combining said selected value with a previous traditional search condition using boolean logic.

17. The apparatus of claim 11, further including means for repeating said method if a user still has not found appropriate results.

18. The apparatus of claim 11, further including means for stepping back one iterative level and repeating said method of a user still has not found appropriate results.

19. A apparatus for data driven searching of information including:
means for performing a traditional search, producing results;
means for producing a data grid from said results, said data grid including one or more axes of dimension values, each axes of dimension values representing a different dimension, and one or more cells containing corresponding aggregate values, each aggregate value being a value computed over results which match the corresponding cell's dimension values, wherein each of said dimensions is defined using a column from a rowset of said results and at least one column from said rowset of said results is not represented by a dimension, wherein said aggregate value for each of said cells is computed on one of said at least one column not represented by a dimension;
means for refining said traditional search by selecting one of said dimension values or aggregate values; and
means for passing said selected value back into said traditional search using iterative techniques.

20. A program storage device readable by a machine, tangibly embodying a program of instructions executable by the machine to perform a method for data driven searching of information, the method including:
performing a traditional search, producing results;
producing a data grid from said results, said data grid including one or more axes of dimension values, each axes of dimension values representing a different dimension, and one or more cells containing corresponding aggregate values, each aggregate value being a value computed over results which match the corresponding cell's dimension values;
refining said traditional search by selecting one of said dimension values or aggregate values; and
passing said selected value back into said traditional search using iterative techniques.

21. A program storage device readable by a machine, tangibly embodying a program of instructions executable by the machine to perform a method for data driven searching of information, the method including:
performing a traditional search, producing results;
producing a data grid from said results, said data grid including one or more axes of dimension values, each axes of dimension values representing a different dimension, and one or more cells containing corresponding aggregate values, each aggregate value being a value computed over results which match the corresponding cell's dimension values, wherein each of said dimensions is defined using a column from a rowset of said results;
refining said traditional search by selecting one of said dimension values or aggregate values; and
passing said selected value back into said traditional search using iterative techniques.
